# EUROPÄISCHE PATENTANMELDUNG

(11) **EP 0 590 173 A1**
(43) Veröffentlichungstag der Anmeldung: **06.04.1994**
(21) Anmeldenummer: 92116527.0
(22) Anmeldetag: 28.09.1992
(51) Int. Cl.: G10L 5/06

(54) **Computersystem zur Spracherkennung**

(71) Anmelder: INTERNATIONAL BUSINESS MACHINES CORPORATION, Armonk, NY 10504 (US)
(72) Erfinder: Moese, Gerald, W-6320 Alsfeld-Eifa (DE); Mohr, Karlheinz, W-6920 Sinsheim (DE); Bandara, Upali, Dr., W-6906 Leimen (DE)
(74) Vertreter: Schäfer, Wolfgang, Dipl.-Ing.

(57) **Zusammenfassung**

Es ist ein Computersystem zur Spracherkennung beschrieben, bei dem eine Wort-Tabelle und eine Triphone-Tabelle im Speicher vorhanden ist. Stößt das Computersystem bei der Erkennung eines unbekannten gesprochenen Textes auf ein neues Wort, das in der Wort-Tabelle nicht enthalten ist, so kann die fenemische Grundform dieses neuen Wortes mit Hilfe der Triphone-Tabelle synthetisch erzeugt werden. Zu diesem Zweck wird das neue Wort in Triphones zerlegt und es werden die zu den einzelnen Triphones zugehörigen fenemischen Folgen aus der Triphone-Tabelle ausgelesen. Die fenemischen Folgen werden dann entsprechend der phonetischen Grundform des neuen Wortes aneinandergefügt, wodurch die fenemische Grundform des neuen Wortes entsteht.

## Beschreibung

Die Erfindung betrifft ein Computersystem zur Spracherkennung, mit Mitteln zur Erzeugung von fenemischen Grundformen von Wörtern, wobei die fenemische Grundform eines Wortes eine Anzahl von akustischen Labeln aufweist, und mit Mitteln zur Speicherung der Wörter und der zugehörigen fenemischen Grundformen.

Bei bekannten Spracherkennungssystemen wird ein von einem Sprecher gesprochener Text von einem Computersystem in den zugehörigen geschriebenen Text umgesetzt. Das dazu erforderliche Erkennen des gesprochenen Textes wird dadurch erreicht, daß akustische Informationen, die das Computersystem vorher aus einem gesprochenen Trainingstext gewonnen hat, mit denjenigen akustischen Informationen verglichen werden, die das Computersystem aus dem relevanten, zu erkennenden Text gewinnt. Die aus dem gesprochenen Trainingstext gewonnenen akustischen Informationen enthalten u.a. eine Wort-Tabelle, in der all diejenigen Wörter abgespeichert sind, die das Computersystem kennt und die damit von dem Computersystem erkannt werden können. Als akustische Information ist zu jedem Wort in der Wort-Tabelle dessen fenemische Grundform angegeben, die in bekannter Weise aus dem gesprochenen Trainingstext mit Hilfe des sogenannten "growing"-Algorithmus bzw. Viterbi Alignments (US 4,759,068) auf Wortbasis erzeugt worden ist.

Enthält ein zu erkennender gesprochener Text ein neues Wort, das nicht in der Wort-Tabelle enthalten ist, so ist es für das Computersystem nicht möglich, dieses neue Wort korrekt zu erkennen.

Hierzu war es früher dann erforderlich, daß mit Hilfe eines neuen gesprochenen Trainingstextes, der das neue Wort enthielt, die fenemische Grundform zu dem neuen Wort erzeugt und in der Wort-Tabelle abgespeichert wurde. Trat das neue Wort danach in einem zu erkennenden Text auf, so wurde es in der auf diese Weise ergänzten Wort-Tabelle gefunden und damit erkannt. Offensichtlich ist der aufzubringende Aufwand, insbesondere das Sprechen des neuen Trainingstextes, viel zu hoch.

In dem IBM Technical Disclosure Bulletin, Vol. 33, Nr. 6b, November 1990, Seite 233 - 237 ist eine andere Methode beschrieben, mit der versucht wird, die fenemische Grundform eines neuen, dem Computersystem bisher unbekannten Wortes auf einfachere Weise zu erzeugen und in die Wort-Tabelle aufzunehmen. Zu diesem Zweck wird das neue Wort zuerst in seine phonetische Grundform umgesetzt. Danach wird die phonetische Grundform in sogenannte Triphones zerlegt, wobei es sich bei einem Triphone um die Aufeinanderfolge von drei Lauten der phonetischen Grundform handelt. Die in dem neuen Wort enthaltenen Triphones werden in den bereits in der Wort-Tabelle enthaltenen Wörtern gesucht, um danach die leafemische Grundform des mittleren Lautes des aufgefundenen Triphones an die entsprechende Stelle der fenemischen Grundform des neuen Wortes zu übernehmen. Die fenemische Grundform des neuen Wortes wird also aus einer Anzahl leafemischer Grundformen zusammengesetzt. Ist ein Triphone des neuen Wortes nicht in der Wort-Tabelle enthalten, so wird mit Hilfe von Ähnlichkeitsmatrizen die Suche nach ähnlichen Triphones fortgesetzt. Insbesondere das Prozessieren dieser Ähnlichkeitsmatrizen kann unter ungünstigen Vorraussetzungen eine hohe Rechenzeit erfordern.

Aufgabe der Erfindung ist es, ein Computersystem zur Spracherkennung zu schaffen, das auf möglichst einfache und möglichst schnelle Art und Weise neue, dem Computersystem bisher unbekannte Wörter verarbeitet.

Diese Aufgabe wird bei einem Computersystem der eingangs genannten Art dadurch erreicht, daß Mittel zur Speicherung von Triphones und von zugehörigen fenemischen Folgen vorgesehen sind, wobei die fenemische Folge eines Triphones eine Anzahl von akustischen Labeln aufweist.

Tritt in dem von dem Computersystem zu erkennenden gesprochenen Text ein neues Wort auf, so wird dieses neue Wort in Triphones zerlegt. Aus der erfindungsgemäßen Triphone-Tabelle werden die zu den Triphones des Wortes zugehörigen fenemischen Folgen ausgelesen, um dann zur fenemischen Grundform des neuen Wortes zusammengefügt zu werden. Die Erzeugung der fenemischen Grundform eines neuen Wortes reduziert sich somit auf das Auslesen und Zusammenfügen von fenemischen Folgen aus der Triphone-Tabelle.

Da es in jeder Sprache nur eine endliche Anzahl von Lauten gibt, ist auch die Anzahl von Triphones endlich. Dies hat zur Folge, daß bei einer vollständigen Triphone-Tabelle zu jedem möglichen Triphone eines Wortes die zugehörige fenemische Folge vorhanden ist. Jedes neue Wort, das in Triphones zerlegt ist, kann somit mit Hilfe der vollständigen Triphone-Tabelle aus den zugehörigen fenemischen Folgen zusammengesetzt werden. Ähnlichkeitsbetrachtungen oder dergleichen sind nicht erforderlich.

Die zu den Triphones gehörigen fenemischen Folgen werden erfindungsgemäß dadurch erzeugt, daß ein gesprochener Trainingstext zuerst in Triphones zerlegt wird, und daß danach der "growing"-Algorithmus auf die Triphones angewandt wird. Mit Hilfe des "growing"-Algorithmus entstehen also die fenemischen Folgen, die in der Triphone-Tabelle abgespeichert sind.

Sollte die in dem Computersystem abgespeicherte Triphone-Tabelle nicht vollständig sein, so ist es möglich, daß ein neues Wort ein Triphone enthält, das vom Computersystem nicht in der Triphone-Tabelle aufgefunden werden kann. Damit auch in diesem Fall die fenemische Grundform des neuen Wortes gebildet werden kann, ist es möglich, mit Hilfe einer weiteren Uniphone-Tabelle, 1,5-Phone-Tabelle oder einer klassifizierten Triphone-Tabelle eine fenemische Folge aufzufinden, die der fenemischen Folge des nicht-vorhandenen Triphones im wesentlichen entspricht. Diese ersatzweise aufgefundene fenemische Folge wird dann zur Bildung der fenemischen Grundform des neuen Wortes herangezogen.

Weitere Vorteile und Ausgestaltungen der Erfindung ergeben sich aus der nachfolgenden Beschreibung von Ausführungsbeispielen, die in der Zeichnung dargestellt sind.
- Fig. 1a: zeigt einen Auszug aus einer Wort-Tabelle,
- Fig. 1b: einen Auszug aus einer Triphone-Tabelle,
- Fig. 2a: einen Auszug aus einer Uniphone-Tabelle,
- Fig. 2b: einen Auszug aus einer 1,5-Phone-Tabelle und
- Fig. 2c: einen Auszug aus einer klassifizierte Triphone-Tabelle.
- Fig. 3: zeigt ein Ablaufdiagramm der Erzeugung der Triphone-, Uniphone-, usw. -Tabelle,
- Fig. 4: zeigt ein Ablaufdiagramm der Erzeugung der fenemischen Grundform eines neuen Wortes mit Hilfe der Triphone-Tabelle und
- Fig. 5: zeigt ein Ablaufdiagramm der Erzeugung der fenemischen Grundform eines neuen Wortes mit der zusätzlichen Hilfe der Uniphone-Tabelle.

Für die nachfolgende Beschreibung wird davon ausgegangen, daß ein Computersystem zur Spracherkennung mit Mitteln versehen ist, mit deren Hilfe ein von einem Sprecher gesprochener Text in akustische Label umgesetzt werden kann. Üblicherweise existieren 200 solcher akustischer Label, die nachfolgend und in den Figuren durch Zahlen gekennzeichnet sind.

Im Zusammenhang mit der Spracherkennung kann jedes Wort außer in der bekannten Schreibschrift auch noch in einer Lautschrift dargestellt werden. Die Lautschrift eines Wortes wird dabei als phonetische Grundform des Wortes bezeichnet. Diese phonetische Grundform besteht somit aus einer Folge von Lauten, wobei jeder Laut nicht nur eine bestimmte Aussprache hat, sondern auch eine bestimmte Länge oder Härte, usw. Die deutsche Sprache weist insgesamt 65 solcher Laute auf, wobei diese Zahl auch Ruhelaute zwischen zwei von einem Sprecher gesprochenen Wörtern berücksichtigt.

Werden drei solcher Laute aneinandergereiht, so wird dies als Triphone bezeichnet. Da die Anzahl der Laute in der deutschen Sprache endlich ist, ist auch die Anzahl die Kombinationssmöglichkeiten dieser Laute zu Triphones endlich.

In einem Computersystem wird jeder Laut durch eine Folge von etwa 15 akustischen Labeln dargestellt. Es ergibt sich somit für jedes Wort eine Labelfolge, die als fenemische Grundform des Wortes bezeichnet wird. Handelt es sich nur um die Labelfolge eines einzigen Lautes, wo wird diese Labelfolge als leafemische Grundform des Lautes bezeichnet.

In der nachfolgenden Beschreibung wird die zu einem Triphone gehörige Labelfolge als fenemische Folge des Triphones bezeichnet. Wichtig ist, daß es sich dabei nicht um die Labelfolge aller drei Laute des Triphones handelt, sondern im wesentlichen nur um die Labelfolge des mittleren Lautes des Triphones. Diese Labelfolge des mittleren Lautes wird jedoch durch den linken und rechten Laut des Triphones beeinflußt. Dies hat zur Folge, daß üblicherweise die fenemische Folge eines Triphones z.B. für den Laut "A:" aufgrund des linken oder rechten Nachbarlauts von der leafemischen Grundform für diesen Laut "A:" abweicht.

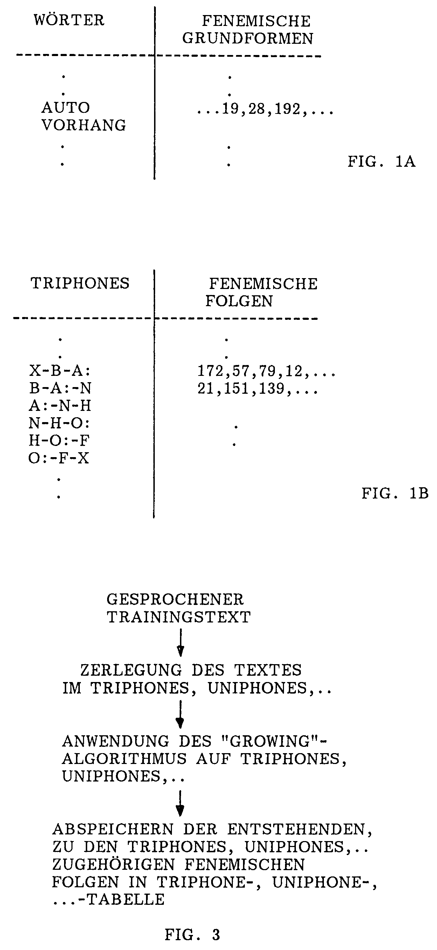

In der nachfolgenden Tabelle sind die eben erläuterten Begriffe zum Zwecke der Zusammenfassung anhand des Wortes "Bahnhof" nochmals angegeben:
- Bahnhof: Wort "Bahnhof"
- BA:NHO:F: phonetische Grundform für "Bahnhof"
- A:: Laut "A"
- BA:N: Triphone "BA:N"
- 172, 57, 79, 12, ... ... 92, 128, 19, 22: fenemische Grundform für "Bahnhof"
- 23, 151, 139, ...: leafemische Grundform für Laut "A:"
- 21, 151, 139, ...: fenemische Abfolge für Triphone "BA:N"
In der Fig. 1a ist ein Auszug aus einer Wort-Tabelle dargestellt, in der zu jedem Wort die fenemische Grundform des Wortes angegeben ist. Diese Wort-Tabelle ist in dem Computersystem zur Spracherkennung abgespeichert. Die fenemischen Grundformen der einzelnen Wörter werden mit Hilfe eines von einem Sprecher gesprochenen Textes, eines sogenannten Trainingstextes, von dem Computersystem erzeugt. Das Computersystem setzt zu diesem Zweck den Trainingstext in eine Folge von akustischen Labeln um. Da der Trainingstext für das Computersystem bekannt ist, ist es daraufhin möglich, daß das Computersystem die Labelfolgen zu bestimmten Wörtern des Trainingstextes zuordnet, daß also das Computersystem die Labelfolge entsprechend den Wörtern des Trainingtextes zerlegt. Auf der Basis dieser Zerlegung wird danach der als solcher bekannte "growing"-Algorithmus auf die den Wörtern zugeordneten Labelfolgen angewandt. Der "growing"-Algorithmus erfüllt dabei den Zweck, eine optimale fenemische Grundform für alle möglichen Aussprachen eines Wortes zu erzeugen. Das Ergebnis des "growing"-Algorithmus sind die fenemischen Grundformen der einzelnen Wörter, wie sie in der Wort-Tabelle der Fig. 1a angegeben sind.

In der Wort-Tabelle der Fig. 1a können nicht alle Wörter und alle zugehörigen fenemischen Grundformen, die in der deutschen Sprache existieren, vorhanden sein. Dies ergibt sich daraus, daß die deutsche Sprache andauernd neue Wörter, insbesondere neue zusammengesetzte Substantive, erzeugt, und daß des weiteren die Anzahl von Fachwörtern, beispielsweise im medizinischen oder technischen Bereich, nahezu unbeschränkt ist. Die Unvollständigkeit der Wort-Tabelle der Fig. 1a hat somit zur Folge, daß das Computersystem zur Spracherkennung immer wieder mit neuen Wörtern konfrontiert wird, die in der Wort-Tabelle der Fig. 1a nicht enthalten sind.

Damit derartige neue Wörter vom Computersystem automatisch in der abgespeicherten Wort-Tabelle der Fig. 1a ergänzt werden können, ist die Triphone-Tabelle der Fig. 1b vorgesehen. In dieser Triphone-Tabelle der Fig. 1b ist zu allen möglichen Triphones die jeweils zugehörige fenemische Folge angegeben. Wie bereits erwähnt wurde, ist in der deutschen Sprache die Anzahl der Laute und damit auch die Anzahl der Triphones endlich. Somit handelt es sich bei der Triphone-Tabelle der Fig. 1b um eine vollständige Tabelle mit einer endlichen Anzahl von Eintragungen.

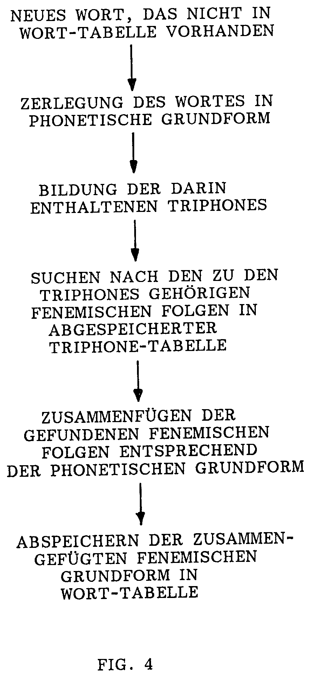

Die Erzeugung der zu den Triphones zugehörigen fenemischen Folgen wird entsprechend der Fig. 3 in ähnlicher Weise durchgeführt wie die Erzeugung der zu den Wörtern gehörigen fenemischen Grundformen. Zu diesem Zweck wird ein von einem Sprecher gesprochener Trainingstext, der dem Computersystem bekannt ist, in Triphones zerlegt. Danach wird wiederum der "growing"-Algorithmus auf die den Triphones zugehörigen Folgen von akustischen Labeln angewandt. Auf diese Weise wird für jedes Triphone eine fenemische Folge erzeugt, die alle möglichen Aussprachen des Triphones optimal berücksichtigt. Die auf diese Weise erzeugten fenemischen Folgen sind in der Triphone-Tabelle der Fig. 1b angegeben.

Wird das Computersystem dazu eingesetzt, einen von einem Sprecher gesprochenen und dem Computersystem unbekannten Text zu erkennen und in einen geschriebenen Text umzusetzen, so wird wie bei dem Trainingstext der gesprochene Text in eine Folge von akustischen Labeln umgesetzt. Es folgen danach eine Vielzahl von statistischen Vergleichen, mit deren Hilfe das Computersystem versucht, den gesprochenen Text zu erkennen. Bei einem dieser statistischer Vergleiche werden die akustischen Label des unbekannten gesprochenen Textes mit denjenigen akustischen Labeln verglichen, die in der Wort-Tabelle der Fig. 1a enthalten sind. Das Ergebnis dieses Vergleiches ist üblicherweise ein Wort, dessen fenemische Grundform entsprechend der Wort-Tabelle der Fig. 1a der Labelfolge des unbekannten gesprochenen Textes am ähnlichsten ist.

Ist ein Wort des gesprochenen Textes gar nicht in der Wort-Tabelle der Fig. 1a enthalten, so hat dies zur Folge, daß der eben beschriebene Vergleich in jedem Fall ein falsches Wort als Ergebnis aus der Wort-Tabelle der Fig. 1a herausgreift. Dieses fehlerhafte Wort muß daraufhin vom Benutzer korrigiert werden und kann dann auf Wunsch des Benutzers in der Wort-Tabelle der Fig. 1a ergänzt werden.

Wie der Fig. 4 zu entnehmen ist, wird zu diesem Zweck das neue, dem Computersystem unbekannte Wort in seine phonetische Grundform, also in seine Lautschrift umgesetzt. Danach wird diese phonetische Grundform in alle darin enthaltenen Triphones zerlegt. Dies geschieht dadurch, daß am Anfang und am Ende der phonetischen Grundform ein Ruhelaut ergänzt wird, der im Rahmen dieser Beschreibung mit "X" bezeichnet ist. Danach wird der vordere Ruhelaut und die ersten beide Laute der phonetischen Grundform des neuen Wortes als erstes Triphone abgespalten. Nachfolgend werden die ersten drei Laute der phonetischen Grundform des neuen Wortes als nächstes Triphone gewonnen. Das wiederum nächste Triphone besteht aus dem zweiten bis vierten Laut der phonetischen Grundform des neuen Wortes. Diese Art der Erzeugung von Triphones wird fortgesetzt, bis der hintere Ruhelaut Bestandteil eines Triphones geworden ist. Als Beispiel ist in der Triphone-Tabelle der Fig. 1b die Zerlegung des Wortes "Bahnhof" mit der zugehörigen phonetischen Grundform "BA:NHO:F" in die zugehörigen Triphones dargestellt.

Nachdem die phonetische Grundform des neuen Wortes in die zugehörigen Triphones zerlegt ist, sucht das Computersystem die zu den Triphones zugehörigen fenemischen Folgen aus der Triphone-Tabelle der Fig. 1b heraus. Diese aufgefundenen fenemischen Folgen werden danach entsprechend der Reihenfolge der Triphones innerhalb der phonetischen Grundform aneinandergefügt. Auf diese Weise ergibt sich die fenemische Grundform des neuen Wortes, als Summe der aneinandergereihten fenemischen Folgen der Triphones.

Diese mit Hilfe der Triphone-Tabelle der Fig. 1b synthetisch erzeugte fenemische Grundform des neuen Wortes kann dann in der Wort-Tabelle der Fig. 1a ergänzt werden.

Die beschriebene Triphone-Tabelle der Fig. 1b, wie auch das beschriebene Verfahren zur Erzeugung von fenemischen Grundformen entsprechend der Fig. 4 kann auch dazu verwendet werden, die Wort-Tabelle der Fig. 1a ganz allgemein zu erweitern. Zu diesem Zweck kann dem Computersystem eine große Anzahl beispielsweise von Fachwörtern der Medizin über die Tastatur eingegeben werden. Diese neuen Wörter werden dann mit Hilfe eines Phonetisierers wie beschrieben in Triphones zerlegt. Aus der Triphone-Tabelle der Fig. 1b werden dann die zu den Triphones zugehörigen fenemischen Folgen ausgelesen. Nachdem diese fenemischen Folgen entsprechend der phonetischen Grundform der Wörter aneinandergereiht wurden, können die auf diese Weise synthetisch erzeugten fenemischen Grundformen der neuen Wörter in der Wort-Tabelle der Fig. 1a ergänzt werden.

Wie erwähnt wurde, ist in der deutschen Sprache die Anzahl der Laute und damit auch die Anzahl der Triphones endlich. Daraus ergibt sich, daß eine vollständige Triphone-Tabelle entsprechend der Fig. 1b erstellt werden kann. Eine derartige vollständige Triphone-Tabelle enthält jedoch eine sehr große Anzahl von Eintragungen. Es ist deshalb möglich, daß aufgrund des daraus resultierenden hohen Speicherplatzbedarfs oder auch aufgrund des hohen Aufwandes für die Erzeugung all dieser Eintragungen die Triphone-Tabelle nicht vollständig ist. Dies bedeutet, daß nicht alle möglichen Triphones mit den dazugehörigen fenemischen Folgen in der Triphone-Tabelle enthalten sind. Dies wiederum kann zur Folge haben, daß das Computersystem bei der Erzeugung der fenemischen Grundform eines neuen Wortes auf ein Triphone stößt, das nicht in der Triphone-Tabelle der Fig. 1b gefunden werden kann.

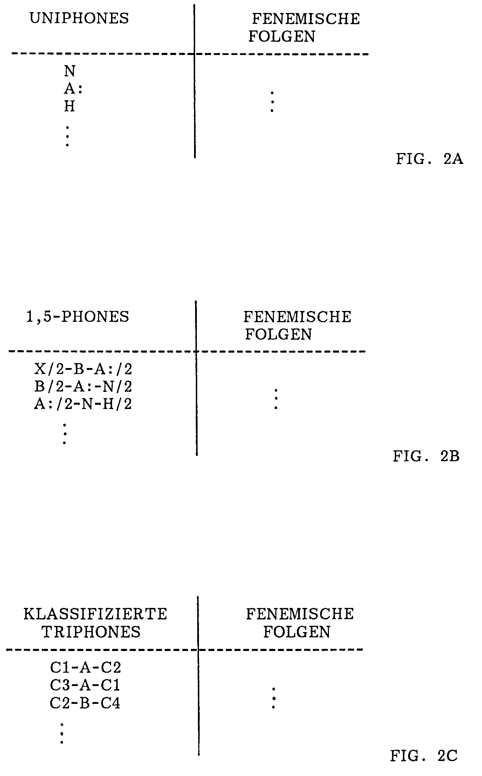

Damit auch in diesem Fall die fenemische Grundform des neuen Wortes erzeugt werden kann, ist eine Uniphone-Tabelle entsprechend der Fig. 2a vorgesehen, in der zur jedem Uniphone die zugehörige fenemische Folge eingetragen ist.

Bei einem Uniphone handelt es sich um einen einzigen Laut; der Begriff Uniphone wurde gewählt, um insbesondere den Zusammenhang der Uniphone-Tabelle und der Triphone-Tabelle deutlich zu machen. Da es sich bei einem Uniphone, wie erwähnt um einen Laut handelt, enthält die Uniphone-Tabelle in der deutschen Sprache genau 65 Uniphones mit zugehörigen fenemischen Folgen.

Die zu einem Uniphone zugehörigen fenemischen Folgen werden entsprechend der Fig. 4 in ähnlicher Weise erzeugt wie die zu einem Triphone gehörigen fenemischen Folgen. Zu diesem Zweck wird ein von einem Sprecher gesprochener Trainingstext von dem Computersystem in die akustischen Labelfolgen umgesetzt. Da der Trainingstext bekannt ist, kann daraufhin das Computersystem Teile dieser Labelfolgen bestimmten Lauten, also bestimmten Uniphones zuordnen. Auf dieser Basis wird dann der "growing"-Algorithmus auf die den Uniphones zugehörigen akustischen Labelfolgen angewandt, wodurch fenemische Folgen entstehen, die alle mögliche Aussprachen dieser Uniphones optimal berücksichtigen. Diese fenemischen Folgen sind in der Uniphone-Tabelle der Fig. 2a eingetragen.

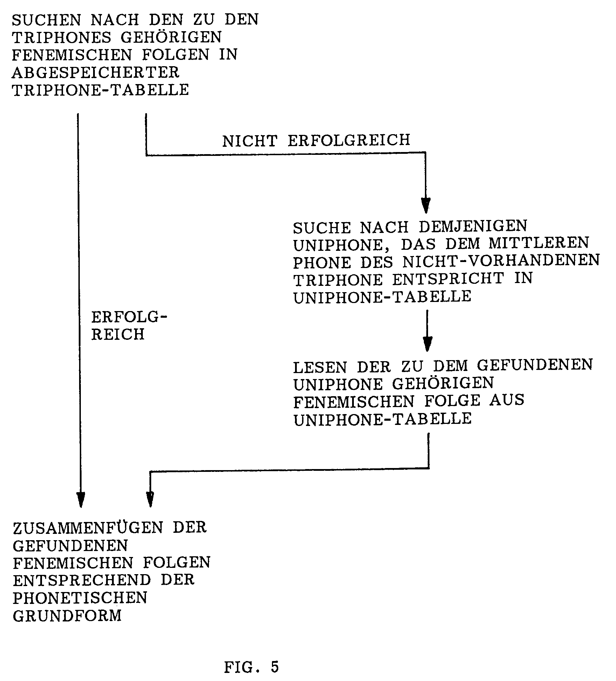

Die Verwendung der Uniphone-Tabelle der Fig. 2a ist in Fig. 5 dargestellt.

Wird bei der Erzeugung der fenemischen Grundform eines neuen Wortes ein Triphone der phonetischen Grundform des neuen Wortes nicht in der Triphone-Tabelle der Fig. 1b gefunden, so wird nunmehr in der Uniphone-Tabelle der Fig. 2a weitergesucht. Das Computersystem sucht dabei nach demjenigen Uniphone, das dem mittleren Phone des nicht-aufgefundenen Triphones entspricht. Ist beispielsweise das Triphone "P-A:-N" nicht in der Triphone-Tabelle der Fig. 1b enthalten, so sucht das Computersystem nach dem Uniphone "A:" in der Uniphone-Tabelle der Fig. 2a. Da in dieser Uniphone-Tabelle der Fig. 2a alle möglichen Uniphones enthalten sind, findet das Computersystem in jedem Fall eine zu dem Uniphone zugehörige fenemische Folge. Das Computersystem verwendet nunmehr diese in der Uniphone-Tabelle der Fig. 2a aufgefundene fenemische Folge anstelle der in der Triphone-Tabelle der Fig. 1b nicht-aufgefundenen fenemischen Folge. Die ersatzweise aufgefundene fenemische Folge aus der Uniphone-Tabelle der Fig. 2a sowie die weiteren fenemischen Folgen aus der Triphone-Tabelle der Fig. 1b werden danach in bekannter Weise entsprechend der phonetischen Grundform des neuen Wortes aneinandergereiht. Die Summe aller akustischen Labels bildet dann die fenemische Grundform des neuen Wortes und kann in die Wort-Tabelle der Fig. 1a eingetragen werden.

Als weitere zusätzliche oder alternative Möglichkeit kann in dem Computersystem auch noch eine 1,5-Phone-Tabelle entsprechend der Fig. 2b oder eine klassifizierte Triphone-Tabelle entsprechend der Fig. 2c abgespeichert sein.

Die 1,5-Phone-Tabelle der Fig. 2b geht dabei von der Triphone-Tabelle der Fig. 1b aus. Es werden jedoch nicht die vollständigen, zu dem linken und dem rechten Phone gehörigen akustischen Labelfolgen verwendet, sondern jeweils nur die an das mittlere Phone angrenzende Hälfte dieser Labelfolgen. Dies ist in der Fig. 2b durch "X/2" oder "N/2" zum Ausdruck gebracht. Auf diese "verkürzten" Triphones wird dann in bekannter Weise entsprechend der Fig. 3 der "growing"-Algorithmus angewandt. Die daraus resultierenden fenemischen Folgen sind in der 1,5-Phone-Tabelle der Fig. 2b eingetragen.

Auch die klassifizierte Triphone-Tabelle der Fig. 2c geht von der Triphone-Tabelle der Fig. 1b aus. Statt der linken und der rechten Phones werden bei der klassifizierten Triphone-Tabelle der Fig. 2c jedoch Phoneklassen (C1, C2, ...) verwendet, die beispielsweise angeben, ob es sich um einen Vokal oder einen Konsonanten handelt, ob es sich um Zisch- oder Summlaute handelt, ob der Laut hart oder weich ausgesprochen wird, usw. Auf der Basis dieser klassifizierten Triphones wird in bekannter Weise entsprechend der Fig. 3 der "growing"-Algorithmus angewandt. Die sich daraus ergebenden fenemischen Folgen sind in der klassifizierten Triphone-Tabelle der Fig. 2c enthalten.

Findet nun das Computersystem bei der Erzeugung der fenemischen Grundform eines neuen Wortes ein Triphone dieses neuen Wortes nicht in der Triphone-Tabelle der Fig. 1b, so ist es möglich, daß das Computersystem entweder alternativ oder auch kumulativ in der Uniphone-Tabelle der Fig. 2a, der 1,5-Phone-Tabelle der Fig. 2b und/oder der klassifizierten Triphone-Tabelle der Fig. 2c weitersucht. Die Suche findet dabei immer auf der Grundlage des mittleren Phones des nicht-aufgefundenen Triphones statt. Findet das Computersystem das entsprechende Uniphone oder das entsprechende 1,5-Phone oder das entsprechende klassifizierte Triphone in den jeweiligen Tabellen der Fig. 2a bis 2c, so liest das Computersystem die zugehörige fenemische Folge aus und verwendet diese fenemische Folge bei der Bildung der fenemischen Grundform des neuen Wortes.

## Patentansprüche

1. Computersystem zur Spracherkennung
mit Mitteln zur Erzeugung von fenemischen Grundformen von Wörtern,
und mit Mitteln (Fig. 1a) zur Speicherung der Wörter und der zugehörigen fenemischen Grundformen,
dadurch gekennzeichnet,
daß Mittel (Fig. 1b) zur Speicherung von Triphones und von zugehörigen fenemischen Folgen vorgesehen sind.

2. Computersystem nach Anspruch 1, dadurch gekennzeichnet, daß die Mittel (Fig. 1b) zur Speicherung von Triphones und von zugehörigen fenemischen Folgen alle möglichen Triphones einer Sprache und alle zugehörigen fenemischen Folgen enthalten.

3. Computersystem nach Anspruch 1, dadurch gekennzeichnet, daß Mittel (Fig. 2a) zur Speicherung von Uniphones und von zugehörigen fenemischen Folgen vorgesehen sind,
wobei die fenemische Folge eines Uniphones eine Anzahl von akustischen Labeln aufweist.

4. Computersystem nach einem der Ansprüche 1 bis 3, dadurch gekennzeichnet, daß Mittel (Fig. 2b) zur Speicherung von 1,5-Phones und von zugehörigen fenemischen Folgen vorgesehen sind, wobei die fenemische Folge eines 1,5-Phones eine Anzahl von akustischen Labeln aufweist.

5. Computersystem nach einem der Ansprüche 1 bis 4, dadurch gekennzeichnet, daß Mittel (Fig. 2c) zur Speicherung von klassifizierten Triphones und von zugehörigen fenemischen Folgen vorgesehen sind, wobei die fenemische Folge eines klassifizierten Triphones eine Anzahl von akustischen Labeln aufweist.

6. Verfahren zum Erzeugen von fenemischen Folgen zur Verwendung in einem Computersystem zur Spracherkennung mit den Schritten:
ein gesprochener Text wird in Triphones zerlegt und der als solcher bekannte "growing"-Algorithmus wird auf die Triphones angewandt, um dadurch die den Triphones zugehörigen fenemischen Folgen zu erzeugen (Fig. 3).

7. Verfahren nach Anspruch 6 mit den Schritten:
ein gesprochener Text wird in Uniphones zerlegt und der als solcher bekannte "growing"-Algorithmus wird auf die Uniphones angewandt, um dadurch die den Uniphones zugehörigen fenemischen Folgen zu erzeugen (Fig. 3).

8. Verfahren nach Anspruch 6 oder 7 mit den Schritten:
ein gesprochener Text wird in 1,5-Phones zerlegt und der als solcher bekannte "growing"-Algorithmus wird auf die 1,5-Phones angewandt, um dadurch die den 1,5-Phones zugehörigen fenemischen Folgen zu erzeugen (Fig. 3).

9. Verfahren nach einem der Ansprüche 6 bis 8 mit den Schritten:
ein gesprochener Text wird in klassifizierte Triphones zerlegt und der als solcher bekannte "growing"-Algorithmus wird auf die klassifizierten Triphones angewandt, um dadurch die den klassifizierten Triphones zugehörigen fenemischen Folgen zu erzeugen (Fig. 3).

10. Verfahren zum Erzeugen von fenemischen Grundformen von Wörtern in einem Computersystem zur Spracherkennung,
wobei das Computersystem Mittel (Fig. 1b) zur Speicherung von Triphones und von zugehörigen fenemischen Folgen enthält,
mit den Schritten:
das Wort, dessen fenemische Grundform erzeugt werden soll, wird in seine phonetische Grundform umgesetzt,
aus der phonetischen Grundform werden alle darin enthaltenen Triphones gewonnen,
aus den Mitteln (Fig. 1b) zur Speicherung von Triphones und von zugehörigen fenemischen Folgen wird zu jedem gewonnen Triphone die zugehörige fenemische Folge gelesen,
die fenemischen Folgen der Triphones werden entsprechend der phonetischen Grundform des Wortes aneinandergefügt und bilden damit die fenemische Grundform des Wortes (Fig. 4).

11. Verfahren nach Anspruch 10,
wobei das Computersystem Mittel (Fig. 2a) zur Speicherung von Uniphones und von zugehörigen fenemischen Folgen enthält,
mit den Schritten:
falls die Mittel (Fig. 1b) zur Speicherung von Triphones und von zugehörigen fenemischen Folgen zu einem bestimmten Triphone keine zugehörige fenemische Folge enthalten,
so wird aus den Mitteln (Fig. 2a) zur Speicherung von Uniphones und von zugehörigen fenemischen Folgen diejenige fenemische Folge gelesen, die zu dem Uniphone gehört, das dem mittleren Phone des nicht-vorhandenen Triphone entspricht (Fig. 5).

12. Verfahren nach Anspruch 10 oder Anspruch 11,
wobei das Computersystem Mittel (Fig. 2b) zur Speicherung von 1,5-Phones und von zugehörigen fenemischen Folgen enthält,
mit den Schritten:
falls keine fenemische Folge vorhanden ist,
so wird aus den Mitteln (Fig. 2b) zur Speicherung von 1,5-Phones und von zugehörigen fenemischen Folgen diejenige fenemische Folge gelesen, die zu dem 1,5-Phone gehört, das der nicht-vorhandenen fenemischen Folge entspricht.

13. Verfahren nach einem der Ansprüche 10 bis 12,
wobei das Computersystem Mittel (Fig. 2c) zur Speicherung von klassifizierten Triphones und von zugehörigen fenemischen Folgen enthält,
mit den Schritten:
falls keine fenemische Folge vorhanden ist, so wird aus den Mitteln (Fig. 2c) zur Speicherung von klassifizierten Triphones und von zugehörigen fenemischen Folgen diejenige fenemische Folge gelesen, die zu dem klassifizierten Triphone gehört, das der nicht-vorhandenen fenemischen Folge entspricht.
